# EUROPÄISCHE PATENTANMELDUNG

(11) **EP 0 774 214 A2**
(43) Veröffentlichungstag der Anmeldung: **21.05.1997**
(21) Anmeldenummer: 97102556.4
(22) Anmeldetag: 16.07.1993
(51) Int. Cl.: A24C 5/35, B65G 47/51

(54) **Fördervorrichtung für Zigaretten**

(30) Priorität: 25.07.1992 DE 4224609
(62) Teilanmeldung aus: 93111441.7
(71) Anmelder: Hauni Maschinenbau Aktiengesellschaft, D-21033 Hamburg (DE)
(72) Erfinder: Golz. Peter, 21217 Seevetal (DE); Rinke, Andreas, 23843 Bad Oldesloe (DE); Krössmann, Jürgen, 19063 Schwerin (DE)

(57) **Zusammenfassung**

Es wird eine Vorrichtung zum Fördern von Artikeln entlang einer Förderstrecke, insbesondere zum Fördern eines Massenstroms stabförmiger Artikel der tabakverarbeitenden Industrie beschrieben, welche die Artikel (27) von einer Aufgabezone (21) entlang der Förderstrecke zu einer Abgabezone (22) bewegende Fördermittel (18) und eine die Fördermittel wenigstens in einem Förderstreckenabschnitt (2,3) führende Führungsbahn (1) aufweist.

Die Aufgabe besteht darin, eine solche Fördervorrichtung als Durchlaufspeicher mit veränderbarer Aufnahmekapazität auszubilden.

Dazu besteht die Führungsbahn (1) aus zwei um eine gemeinsame vertikale Achse (4) herum angeordneten Führungsbahnwendeln, welche die als Band- oder Kettenförderer (18) ausgebildeten Fördermittel wenigstens in einer Teillänge führen. Die Führungsbahnwendeln (2,3) sind durch ein Brückenelement (9) miteinander verbunden. Zum Verändern der Länge der Förderstrecke ist der Abstand des Brückenelements (9) zur Aufgabezone (21) und zur Abgabezone (22) veränderbar.

## Beschreibung

Die Erfindung betrifft eine Vorrichtung zum Fördern von Artikeln entlang einer Förderstrecke, insbesondere zum Fördern eines Massenstroms stabförmiger Artikel der tabakverarbeitenden Industrie, entsprechend dem Oberbegriff des Anspruchs 1.

Die im folgenden beschriebene Vorrichtung ist zwar besonders im Hinblick auf das allgemein übliche Fördern von Zigaretten oder anderen stabförmigen Artikeln der tabakverarbeitenden Industrie in einem mehrlagigen Massenstrom konzipiert, kann aber prinzipiell auch zum Fördern anderer für den liegenden Transport geeigneter Artikel wie in einer Reihe mit oder ohne Abstand aufeinanderfolgender Gegenstände, Packungen, Artikelgruppen und dergleichen verwendet werden. Dabei sind unter stabförmigen Artikeln der tabakverarbeitenden Industrie in erster Linie Filter- oder Plainzigaretten, Zigarillos, Stumpen und sonstige rauchbare Artikel aus Tabak oder Tabakersatzstoffen, rauchlose Zigaretten, Filterstäbe und dergleichen zu verstehen.

In modernen Produktionsanlagen sind Maschinen unterschiedlicher Art, die Artikel herstellen, be- und verarbeiten, verpacken usw., über Förderstrecken und Speichereinrichtungen miteinander verbunden. Die Speichereinrichtungen dienen dazu, Leistungsdifferenzen der miteinander verbundenen Maschinen auszugleichen, um einen möglichst kontinuierlichen Arbeitsablauf sicherzustellen, auch wenn einzelne der miteinander verbundenen Maschinen gestört sind oder zeitweilig ganz ausfallen.

Eine Anlage mit einer Maschine zum Herstellen und einer Maschine zum Verpacken von Zigaretten, die über eine Massenstromförderstrecke miteinander verbunden sind, ist in der DE 33 45 117 A1 und der entsprechenden GB 2 133 759 A beschrieben. Zum Ausgleich von Leistungsdifferenzen der Maschinen sind Speicher einrichtungen vorgesehen, von denen eine als Wendelförderer ausgebildet ist, der im Bedarfsfall auf einem wendelförmig um eine Achse geführten Bandförderer aus der Förderstrecke abgezweigte Artikel aufnimmt bzw. gespeicherte Artikel in die Förderstrecke abgibt. Dieser Speicher hat zwar auf kleinem Raum ein relativ großes Speichervolumen, hat aber den Nachteil, daß Artikel, die zuerst im Speicher aufgenommen werden, zuletzt abgegeben werden. Da der Speicher bei optimalem Betrieb nicht leergefahren wird, bleiben die zuerst in die Speicherstrecke gelangten Artikel lange darin und können dadurch unbrauchbar werden. Das hat unerwünschte Verluste zur Folge.

Durch die DE-OS 2 234 287 ist eine Fördervorrichtung mit einem Bandförderer bekannt, der von einer Aufgabestelle nacheinander in entgegengesetzten Richtungen durch zwei benachbarte Wendelstrecken zu einer Abgabestelle verläuft. Hierbei handelt es sich um eine Durchlaufstrecke konstanter Länge, auf der die geförderten Artikel während des Transports für eine bestimmte Zeit in einem vorgegebenen Raum bzw. Bereich bleiben und bestimmten Behandlungen unterworfen werden können. So können in einer solchen Förderstrecke Lebensmittel Behandlungen wie Frosten, Erhitzen, Sterilisieren usw. unterzogen werden, die eine gewisse Behandlungszeit erfordern. Als Speicher zum Ausgleichen von Leistungsdifferenzen angeschlossener Maschinen ist diese bekannte Vorrichtung nicht geeignet.

Die GB-PS 1 301 843 beschreibt eine Vorrichtung der eingangs angegebenen Art. Diese Vorrichtung weist zwei als Wendeln ausgebildete Führungsbahnabschnitte auf, deren Windungen einen ovalen Verlauf um zwei gemeinsame, zueinander verfahrbare, vertikale Säulen haben. Der Förderweg verläuft in einer Wendel aufwärts, geht oben in die andere Wendel über und verläuft in dieser abwärts. Zur Vergrößerung der Aufnahmekapazität wird die Förderstrecke verlängert, indem die Säulen weiter voneinander entfernt werden. Durch gegenseitiges Annähern der Säulen ergeben sich eine Verkürzung des Förderweges und eine Verringerung der Aufnahmekapazität. Diese Vorrichtung hat den Nachteil hohen konstruktiven und funktionstechnischen Aufwands. Zur Veränderung der Förderstrecke muß wenigstens eine der Säulen samt aller Führungseinrichtungen für den Bandförderer verfahren werden, was die Bewegung großer Massen bedeutet. Dazu muß jede Windung der Wendeln zwei längenvariable Abschnitte aufweisen, was die Anforderungen an den mechanischen Aufbau sehr erhöht. Die bekannte Vorrichtung scheint daher wenig praktikabel zu sein.

Durch die FR-PS 1 395 589 und die GB 2 143 788 sind weitere Vorrichtungen zum Speichern von stabförmigen Artikeln der tabakverarbeitenden Industrie mit längenvariablen Förderstrecken bekannt. Diese Förderstrecken verlaufen aber im wesentlichen linear horizontal und weisen daher einen nicht vergleichbaren Aufbau auf.

Der Erfindung liegt die Aufgabe zugrunde eine Vorrichtung der eingangs angegebenen Art weiter zu verbessern, insbesondere eine neue Speichermöglichkeit für entlang einer Förderstrecke bewegte Artikel, insbesondere stabförmige Artikel der tabakverarbeitenden Industrie anzugeben.

Gelöst wird diese Aufgabe erfindungsgemäß durch die im Kennzeichen des Anspruchs 1 angegebenen Mittel. Dabei wirkt die Förderstrecke selbst als Speicher. Ist die die Artikel aufnehmende Maschine gestört oder fällt sie aus, so wird die Förderstrecke verlängert, so daß sie die von der vorangehenden Maschine abgegebenen Artikel aufnimmt und speichert, bis die gestörte Maschine wieder arbeitet. Umgekehrt werden der die Artikel aufnehmenden Maschine Artikel aus der Förderstrecke zugeführt, indem diese verkürzt wird, wenn die die Artikel abgebende Maschine nicht arbeitet.

Die Anordnung der Führungsbahn gemäß der Erfindung in Wendeln um eine gemeinsame Achse erfordert auch für große Längen der Förderstrecke und damit für eine große Speicherkapazität nur relativ wenig Platz und bietet einfache Möglichkeiten für die Veränderung der Länge der Förderstrecke. Diese wird gemäß der Erfindung dadurch realisiert, daß zum Verändern der Länge der Förderstrecke der Abstand des Brückenelements zur Auf- und Abgabezone verändert wird. Damit kann die Länge der Förderstrecke im Rahmen der Länge der Führungsbahnabschnitte beliebig variiert werden. Die Förderstrecke durchläuft also nicht die volle Länge der Führungsbahnabschnitte, sondern sie wird vor dem Ende der Führungsbahnabschnitte entsprechend der jeweils erforderlichen Speicherkapazität abgeleitet.

Merkmale weiterer Fortführungen der Erfindung und vorteilhafter Ausgestaltungen sind in den Unteransprüchen 5 bis 7 enthalten. Dabei geben die Ansprüche 5 und 6 Merkmale des Brückenelements an, welche dessen Aufbau und Funktion betreffen. Durch die Gestaltung des Brückenelements als Bandbrücke wird eine schonende und störungsfreie Förderung der Artikel von einem Führungsbahnabschnitt zum anderen gewährleistet. Dabei ist durch die Anordnung des Brückenelements in dem von den Wendeln definierten Raum geringer Platzbedarf sichergestellt. Anspruch 7 enthält Merkmale eines als Band- oder Kettenförderers ausgebildeten Fördermittels. Der Einsatz eines einzigen, die Aufgabezone mit der Abgabezone verbindenden Bandförderers hat zur Folge, daß die Artikel nicht von einem Förderer auf einen anderen umgeladen werden müssen. Das trägt zur Schonung der Artikel bei, was insbesondere für die Förderung von Zigaretten im Massenstrom von Bedeutung ist.

Die Erfindung bietet den Vorteil, daß die in den Führungsbahnwendeln verlaufende, längenveränderbare Förderstrecke einen Durchlaufspeicher großer Aufnahmekapazität darstellt. Diese ist besonders geeignet und vorgesehen für Zigaretten und andere stabförmige Artikel der tabakverarbeitenden Industrie, aber auch für Packungen und andere einzelne Gegenstände, die in dichter Folge oder mit Abstand zueinander die Förderstrecke durchlaufen können. Da es sich um einen Durchlaufspeicher handelt, hat diese Fördervorrichtung den weiteren Vorteil, daß zuerst aufgenommene Artikel auch zuerst wieder abgegeben werden, so daß keine Gefahr der Überlagerung einzelner Artikel besteht. Die Fördervorrichtung verringert daher besonders bei empfindlichem Gut die Gefahr von Ausschußerzeugung. Der konstruktive Aufbau der erfindungsgemäß vorgeschlagenen Fördervorrichtung hat den weiteren Vorteil, daß sie auf engem Raum viel Speichervolumen bietet. Außerdem ist die vorgeschlagene Fördervorrichtung sehr flexibel und bietet viele Variationsmöglichkeiten, so daß sie an viele Gegebenheiten optimal angepaßt werden kann.

Die Erfindung wird nun anhand der Zeichnung näher erläutert.

Es zeigen:
- Figuren 1 bis 6: jeweils eine perspektivische Ansicht und eine Draufsicht dreier unterschiedlicher Ausführungsbeispiele der Vorrichtung nach der Erfindung in schematischer Darstellung,
- Figur 7: eine separate Darstellung einer Bandbrücke gemäß Figur 1 und
- Figur 8: einen Schnitt durch einen Führungsbahnträger entlang der Line H-H in Figur 7.

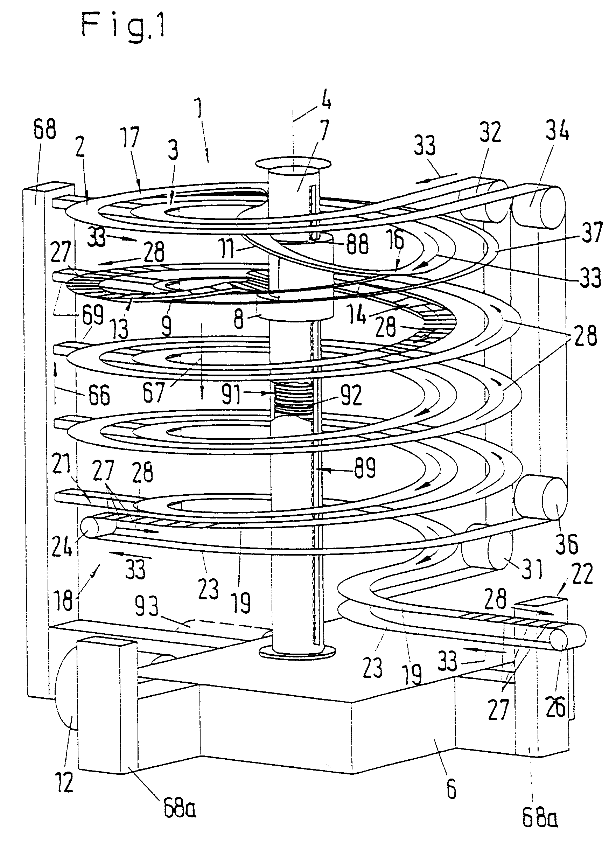

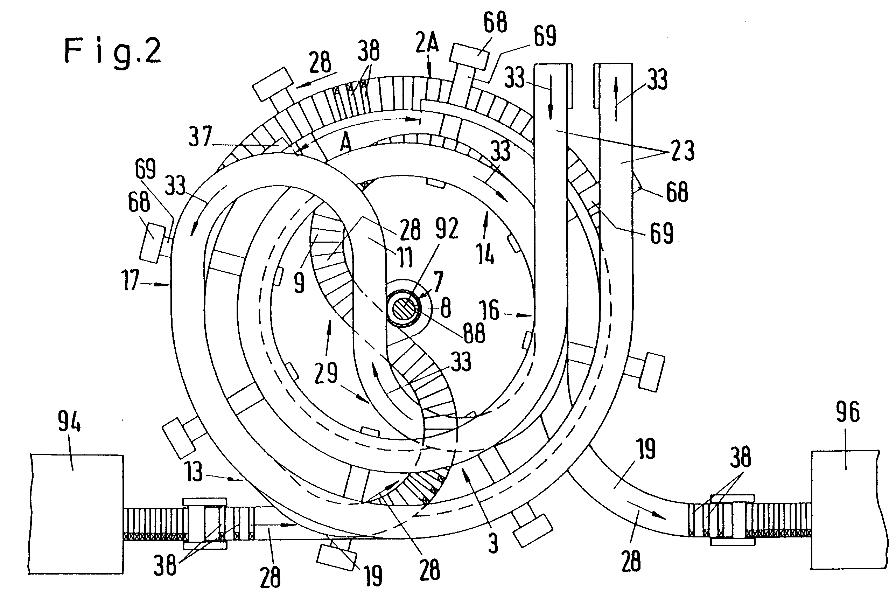

Ein erstes Ausführungsbeispiel der Vorrichtung nach der Erfindung ist in den Figuren 1 und 2 in einer perspektivischen Ansicht und einer schematischen Draufsicht dargestellt. Wie in Figur 1 zu erkennen ist, weist die Vorrichtung eine Führungsbahn 1 mit zwei Führungsbahnabschnitten 2 und 3 auf, die konzentrisch mit gleicher Steigung wendelförmig um eine gemeinsame vertikale Achse 4 herum angeordnet sind. Die beiden Führungsbahnwendeln 2 und 3 haben im gezeigten Ausführungsbeispiel der Erfindung unterschiedliche Radien und verlaufen parallel zueinander. Die Führungsbahnwendel 3 liegt konzentrisch innerhalb der Führungsbahnwendel 2. Die Führungsbahnwendeln sind vom äußeren Umfang her von einem Gestell gehalten und gestützt, von dem in Figur 1 nur ein Sockel 6 und eine Säule 68 mit etwa radial nach innen ragenden Stützarmen 69 zum Tragen der Führungsbahnwendeln schematisch dargestellt sind. In der Draufsicht der Figur 2 ist zu erkennen, daß im gezeigten Ausführungsbeispiel acht rings um die Führungsbahnwendeln 2 und 3 aufgestellte Säulen 68 mit freitragenden Stützarmen 69 die Führungsbahnwendeln tragen. In Figur 1 sind die Positionen weiterer zwei Säulen durch die Säulenstümpfe 68a angedeutet. Die anderen Säulen und Stützarme sind der besseren Übersichtlichkeit wegen weggelassen.

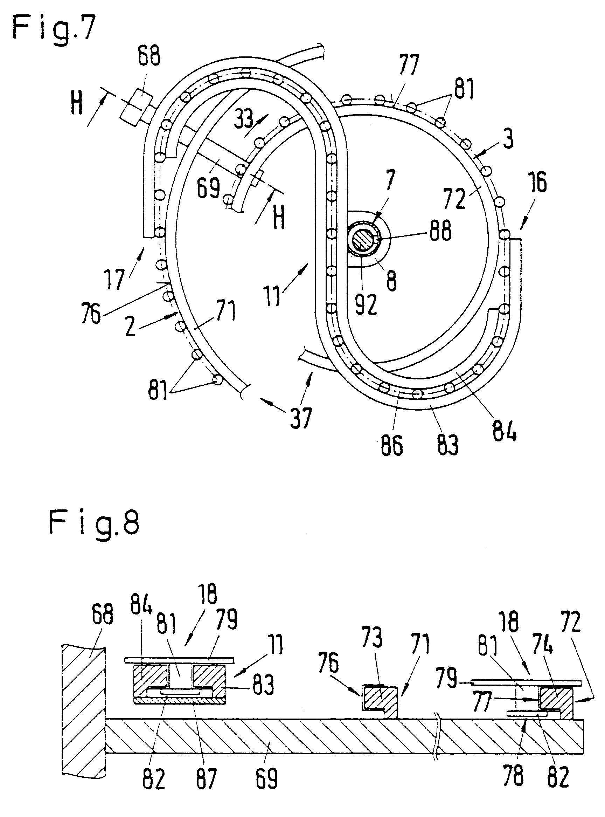

Die Anordnung der Führungsbahnen 2 und 3 auf den Stützarmen 69 und ihre Ausbildung werden im Zusammenhang mit den Figuren 7 und 8 weiter unten näher beschrieben.

Konzentrisch zur Achse 4 ist eine auf dem Sockel 6 getragene zentrale Säule 7 vorgesehen, an der ein Träger 8 für Brückenelemente 9 und 11 drehbar und axial auf und ab bewegbar ist. Der Antrieb des Trägers 8 erfolgt über bekannte, nicht dargestellte Getriebemittel mittels eines Motors 12 in der Weise, daß seine axiale Verstellung bei der Drehung mit der Steigung der Führungsbahnwendeln 2 und 3 übereinstimmt.

Die zusammen mit dem Träger 8 bewegten Brückenelemente 9 und 11 verbinden an axial zueinander versetzten Positionen jeweils die beiden Führungsbahnwendeln 2 und 3. Das Aufnahmeende 13 des Brückenelements 9 korrespondiert dabei mit der äußeren Führungsbahnwendel 2, während sein Abgabeende 14 mit der inneren Führungsbahnwendel 3 zusammenwirkt. Entsprechend wirken die Enden 16 und 17 des zweiten Brückenelements 11 mit der inneren und der äußeren Führungsbahnwendel zusammen. Da die rotatorische und axiale Verstellung des Trägers 8 in Übereinstimmung mit der Steigung der Führungsbahnwendeln 2 und 3 erfolgt, bewegen sich die Enden 13, 14 und 16, 17 der Brückenelemente immer synchron auf den Führungsbahnwendeln entlang.

Die Vorrichtung weist als Fördermittel einen Band- oder Kettenförderer 18 auf, dessen Fördertrum 19 von einer Aufgabezone 21 zu einer Abgabezone 22 und dessen Rücklauftrum 23 zurück zur Aufgabezone 21 verläuft. Der Förderer 18 wird in der Aufgabezone 21 und der Abgabezone 22 durch Rollen 24 bzw. 26 umgelenkt.

Das Fördertrum 19 des Förderers 18, dessen Belegung mit einem lückenlosen, mehrlagigen Zigarettenmassenstrom oder einem anderen Fördergut durch an einigen Abschnitten eingezeichnete Striche 27 angedeutet und dessen Laufrichtung durch Pfeile 28 verdeutlicht ist, ist ausgehend von der Aufgabezone 21 in Förderrichtung 28 auf einer Teillänge der äußeren Führungsbahnwendel 2, über das Aufnahmeende 13 auf das Brückenelement 9, von dort über das Abgabeende 14 auf die innere Führungsbahnwendel 3 und abwärts bis zur Abgabezone 22 geführt. Das als Bandbrücke zum Führen des Fördertrums 19 ausgebildete Brückenelement 9 führt das Fördertrum durch eine S-förmige Wendekurve 29 (Fig.2), so daß das Fördertrum 19, das sich in der ersten Führungsbahnwendel 2 in einer ersten Richtung 66 aufwärts bewegt, in der zweiten Führungsbahnwendel 3 in entgegengesetzter Richtung 67 abwärts bewegt wird.

Das Rücklauftrum 23 ist über Umlenkrollen 31 und 32 von oben in die vom Fördertrum 19 nicht belegte Teillänge der inneren Führungsbahnwendel 3 geführt. In dieser Führungsbahnwendel läuft das Rücklauftrum 23 in Richtung des Pfeils 67 abwärts bis zum zweiten Brückenelement 11, welches es zur äußeren Führungsbahnwendel 2 überführt. Dabei wird seine Bewegungsrichtung 33 umgekehrt, so daß es in der äußeren Führungsbahnwendel 2 in Richtung des Pfeils 66 aufwärts und von deren Ende über Umlenkrollen 34 und 36 zur Aufgabezone zurückverläuft. Auch das zweite Brückenelement 11 ist als Bandbrücke ausgebildet, die das Förderband in einer S-förmigen Wendekurve von einer Führungsbahnwendel 3 in die andere (2) führt. Angetrieben wird der Förderer über eine oder mehrere Umlenkrollen mittels in der Zeichnung nicht dargestellter Antriebsmittel, die im Gestell angeordnet sind.

In der Draufsicht der Figur 2 sind die Förderrichtung 28 des Fördertrums 19 und die Bewegungsrichtung 33 des Rücklauftrums des Förderers 18 mit mehreren entsprechend bezeichneten Pfeilen eingezeichnet. Diese Figur zeigt von oben einen Bereich 2A der äußeren Führungsbahnwendel 2, der zwischen den Enden 13 und 17 der Brückenelemente 9 und 11 liegt und der deshalb keines der Trume des Förderers trägt. In diesem Bereich 2A ist eine Führung 37 zu sehen, welche den Förderer 18 in seiner wendelförmigen Bahn hält und führt. Diese Führung 37 kann als Nut, Steg oder in anderer geeigneter Weise ausgebildet sein. Die Figuren 7 und 8 zeigen ein derzeit bevorzugtes Ausführungsbeispiel der Führung 37. In Figur 7 sind in einer Draufsicht je ein Abschnitt der Führungsbahnwendeln 2 und 3 sowie das Brückenelement 11 dargestellt. Die Führungsbahnwendeln bestehen aus wendelförmig um die Achse 4 verlaufenden Führungsschienen 71 und 72, die in Figur 8 im Schnitt entlang der Linie H-H der Figur 7 zu sehen sind. Die Führungsschienen sind nebeneinander an den Stützarmen 69 befestigt, die von den Säulen 68 her in das Profil der Führungsbahnwendeln 2 und 3 hineinragen. Jede Führungsschiene 71 und 72 weist einen Schienenkopf 73 bzw. 74 auf, an dessen radialer Außenseite eine Führungsfläche 76 bzw. 77 zum Führen des Band- oder Kettenförderers 18 verläuft.

Der Förderer 18, dessen rücklaufendes Trum 23 über die in Figur 7 und 8 gezeigten Förderwegabschnitte läuft, besteht aus Kettengliedern 78 jeweils mit einer Tragplatte 79 zum Transportieren des Fördergutes, einem an der Unterseite der Tragplatte angebrachten, an der Führungsfläche 76 bzw. 77 entlang bewegten Führungsbolzen 81 und einem am freien Ende des Bolzens 81 vorgesehenen, den Schienenkopf 73 bzw. 74 umgreifenden Kragen 82. Der Zug, der auf den umlaufenden Kettenförderer 18 wirkt, genügt, ihn sicher an der Führungsfläche 76 bzw. 77 zu halten und zu führen, obwohl im Bereich der Führungsbahnwendeln 2 und 3 nur diese einseitige Führung der Kette vorgesehen ist. Dies ist eine einfache und wirksame Art der Führung des Kettenförderers 18, die allerdings auch abgewandelt werden kann, ohne den Gedanken der Erfindung zu verlassen.

Wie die Figuren 7 und 8 zeigen, weist das Brückenelement 11 (wie übrigens auch das hier nicht dargestellte Brückenelement 9) der Bandbrücke einen zwischen zwei Schienen 83 und 84 gebildeten Führungsschlitz 86 auf, dessen Weite so bemessen ist, daß die Führungsbolzen 81 der Kettenglieder 78 des Kettenförderers darin in Förderrichtung bewegbar sind. Die Schienen 83 und 84 verlaufen in einem S-Bogen von dem Aufnahmeende 16 des Brückenelements am Umfang der inneren Führungsbahnwendel 3 zum Abgabeende 17 am Umfang der äußeren Führungsbahnwendel 2. Sie sind auf einer ebenso S-förmig verlaufenden Bodenplatte 87 fixiert.

Die Enden 16 und 17 des Brückenelements münden tangential am äußeren Umfang der jeweils zugehörigen Führungsbahnwendel 3 bzw. 2. Das Brückenelement führt den Kettenförderer 18 an seinem Ende 16 zunächst tangential von der Führungsbahn 3 weg nach außen, bis die Kragen 82 der Führungsbolzen 81 der Kettenglieder 78 von der Führungsschiene 72 frei gekommen sind. Auf diesem Wegstück werden die Kettenglieder über ihre Bolzen 81 und Kragen 82 bereits von der äußeren Schiene 83 des Brückenelements geführt. Das Brückenelement überquert dann die innere Führungsbahnwendel 3, verläuft durch den Innenraum der Wendel, überquert nacheinander wieder die innere und die äußere Führungsbahnwendel 2, bevor es den Kettenförderer 18 tangential von außen in die äußere Führungsbahn 2 abgibt. Dabei werden die Bolzen und Kragen der Kettenglieder von der jetzt außen verlaufenden zweiten Schiene 84 geführt, bis die Kragen 82 den Schienenkopf 73 hintergreifen und die Bolzen 81 der Kette 18 wieder sicher an der Führungsfläche 76 geführt sind.

In der gleichen Weise wird das mit Artikeln belegte Fördertrum des Kettenförderers 18 von der äußeren Führungsbahnwendel 2 abgehoben, über das untere S-förmig verlaufende Brückenelement 9 geführt und auf die innere Führungsbahnwendel 3 übergeben, von wo aus es in dieser abwärts läuft.

In einem in Figur 2 dargestellten Winkelabschnitt A ist die Führungsbahn 2A unterbrochen dargestellt, um die darunterliegende Windung der Führungsbahnwendel 2 in ihrer ganzen Breite zu zeigen, die das einen Zigarettenmassenstrom 38 tragende Fördertrum 19 des Förderers 18 aufwärts zum Aufnahmeende 13 des Brückenelements 9 führt.

Als Fördergut sind auf dem Fördertrum 19 des Förderers der besseren Übersichtlichkeit und der Einfachheit halber nur einzelne Zigaretten 38 dargestellt oder durch Striche 27 angedeutet. Tatsächlich ist das Fördertrum 19 von der Aufgabezone 21 bis zur Abgabezone 22 möglichst lückenlos mit einem mehrlagigen Massenstrom von Zigaretten 38 oder mit einer Reihe oder mit Stapeln anderer zu fördernder und gegebenenfalls zu speichernder Artikel belegt.

Im Normalbetrieb, in dem von der vorausgehenden Maschine ebensoviele Artikel an die Aufgabezone 21 des Fördertrums 19 abgegeben werden wie aus der Abgabezone 22 an die folgende Verarbeitungsmaschine weitergegeben werden, durchlaufen alle Artikel mit dem Fördertrum dieselbe, gleichbleibende Förderweglänge. Der Träger 8 mit den Brückenelementen 9 und 11 behält in diesem Falle seine Position unverändert bei.

In dem in Figur 1 dargestellten Zustand hat die Fördervorrichtung nahezu ihre maximale Speicherkapazität erreicht, weil der Träger 8 mit den Brückenelementen 9 und 11 fast am oberen Ende seiner Aufwärtsbewegung steht. Wenn nun die der Aufgabezone 21 des Fördertrums 19 vorgeordnete Maschine ausfällt und keine Artikel mehr an das Fördertrum abgibt, wird die in der Aufgabezone befindliche Umlenkrolle 24 angehalten. Da die die von der Abgabezone 22 abgegebenen Artikel verarbeitende Maschine aber weiterarbeitet, läuft die Umlenkrolle 26 weiter um. Dabei zieht die Umlenkrolle 26 das mit Artikeln 38 belegte Fördertrum 19 aus der inneren Führungsbahnwendel 3 ab. Gleichzeitig rotiert der Träger 8 mit den Brückenelementen 9 und 11 und bewegt sich dabei entsprechend der Steigung der Führungsbahnwendeln abwärts. Dadurch wird über das Brückenelement 9 das Fördertrum auch aus der äußeren Führungsbahnwendel 2 abgezogen, so daß sich die vom Fördertrum 19 belegte Teillänge beider Führungsbahnwendeln 2 und 3 entsprechend verkürzt. Dieser Vorgang kann fortgesetzt werden, bis sich der Träger 8 mit den Brückenelementen 9 und 11 in seiner unteren Grenzposition befindet. In dieser Position ist die Förderstrecke in der Fördervorrichtung auf ihr Minimum reduziert. In dem gleichen Maße wie sich das Fördertrum 19 verkürzt, verlängert sich das Rücklauftrum des Förderers 1. Dieses bewegt sich bei nichtrotierender Rolle 24 über die Umlenkrollen 31 und 32 in Pfeilrichtung 67 von oben in die vom Fördertrum nichtbelegte Teillänge der inneren Führungsbahnwendel 3 und wird vom Brückenelement 11, das sich zusammen mit dem Träger 8 und dem anderen Brückenelement 9 abwärts bewegt, auf der inneren Führungsbahnwendel 3 und über das Brückenelement 11 auch auf der äußeren Führungsbahnwendel zunehmend abgelegt. In demselben Maße wie der Träger 8 mit den Brückenelementen 9 und 11 abwärts wandert, vergrößert sich die von dem Rücklauftrum in den Führungsbahnwendeln 2 und 3 belegte Teillänge. Die Vorrichtung stellt also nicht nur einen Durchlaufspeicher mit veränderbarer Kapazität, sondern auch einen Bandspeicher für entsprechend unterschiedliche Längen des Rücklauftrums dar.

Wenn umgekehrt die die Artikel aus der Abgabezone 22 abnehmende Maschine ausfällt während die die Artikel abgebende Maschine weiterläuft, wird der Förderweg der Artikel in der Führungsbahn 1 durch Heraufbewegen des Trägers 8 mit den Brückenelementen 9 und 11 bei angehaltener Umlenkrolle 26 verlängert, indem die in den Führungsbahnwendeln 2 und 3 vom Fördertrum belegte Teillänge vergrößert wird. Die dafür erforderliche Verlängerung des Fördertrums 19 wird aus einer entsprechenden Verkürzung des Rücklauftrums 23 gespeist, das bei stillstehender Umlenkrolle 26 über die Rollen 24, 36 und 34 in demselben Maß aus dem oberen Teil der Führungsbahnwendeln 2 und 3 abgezogen wird, in dem die Länge des Fördertrums 19 zunimmt. Durch Drehen und gleichzeitiges Auf- und Abfahren des Trägers 8 mit den Brückenelementen 9 und 11 können also Leistungsdifferenzen der über die Fördervorrichtung verbundenen Maschinen ausgeglichen werden. Dabei kann die Speicherkapazität bei relativ kleinem Platzbedarf nahezu beliebig groß ausgebaut werden, ohne daß einzelne Artikel oder Artikelgruppen unter den damit verbundenen negativen Folgeerscheinungen durch zu langen Aufenthalt in der Förderstrecke überaltern und Ausschuß werden.

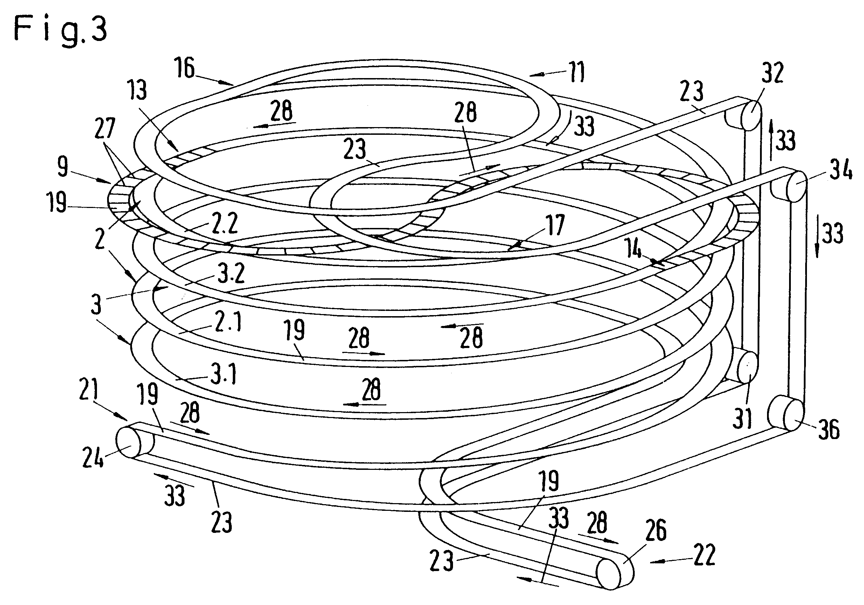

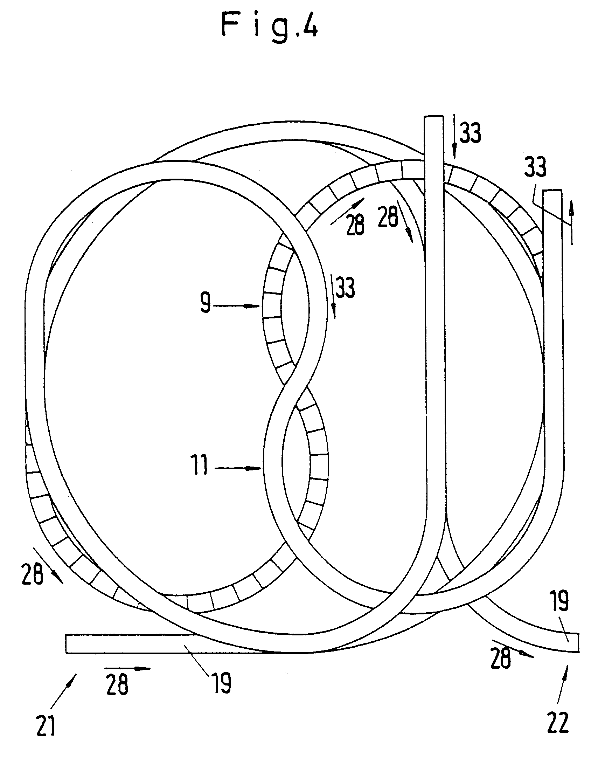

Die Figuren 3 und 4 zeigen in einer perspektivischen Ansicht und einer Draufsicht in schematischer Darstellung eine zweite Ausführung der Vorrichtung nach der Erfindung. Gleiche Teile sind in dieser Darstellung mit denselben Bezugszeichen versehen wie in den Figuren 1 und 2. Diese Ausführung der Fördervorrichtung nach der Erfindung unterscheidet sich von der in den Figuren 1 und 2 dargestellten im wesentlichen dadurch, daß die Führungsbahnwendeln 2 und 3 denselben Durchmesser haben, also im selben radialen Abstand um eine gemeinsame zentrale Achse verlaufen, die hier nicht dargestellt ist. Dabei liegen die Windungen 2.1, 2.2 usw. der Führungsbahnwendel 2 zwischen den Windungen 3.1, 3.2 usw. der Führungsbahnwendel 3. Das Fördertrum 19 des Förderers verläuft von der Aufgabezone 21 her zunächst aufwärts in Förderrichtung 28 in der Führungsbahnwendel 2, wird über das Brückenelement 9, wie im Zusammenhang mit den Figuren 1 und 2 beschrieben, in die Führungsbahnwendel 3 umgelenkt, läuft in dieser abwärts und gelangt schließlich zur Abgabezone 22. Das Rücklauftrum 23 läuft über die Umlenkrollen 31 und 32 zunächst von oben in die Führungsbahnwendel 3 hinein, läuft in der von dem Fördertrum nicht besetzten Teillänge dieser Führungsbahnwendel 3 abwärts bis zum Brückenelement 11, wird von dem Brückenelement 11 in die zweite Führungsbahnwendel 2 umgelenkt, in dieser nach oben geführt und gelangt schließlich über die Umlenkrollen 34 und 36 zurück zur Aufgabezone 21. Die Bewegungsrichtung des Rücklauftrums ist mit den Pfeilen 33 markiert. Das mit Artikeln belegte Brückenelement 9, das das Fördertrum 19 von der Wendel 2 zur Wendel 3 überführt, ist zur besseren Unterscheidung mit Querstrichen 27 versehen. Der Betrieb der Vorrichtung läuft ebenso ab, wie im Zusammenhang mit den Figuren 1 und 2 beschrieben. Der Vorzug des Ausführungsbeispiels der Vorrichtung nach den Figuren 3 und 4 besteht darin, daß die Krümmungsradien sowohl in den Führungsbahnwendeln als auch in den Brückenelementen größer sind als bei der Ausführungsform nach der Figur 1. Das ermöglicht eine bessere Schonung empfindlicher Artikel während des Transports.

Auch bei der in den Figuren 3 und 4 dargestellten Ausführungsform der Erfindung überschneiden sich die Enden 13 und 14 bzw. 16 und 17 der Brückenelemente 9 und 11 tangential mit den jeweils zugeordneten Führungsbahnwendeln 2 bzw. 3. Deutlich ist das an dem Aufnahmeende 13 und dem Abgabeende 14 des Brückenelements 9 in den Figuren 3 und 4 zu erkennen. Auch diese Maßnahme vergrößert den Kurvenradius des Brückenelements 9, was ebenfalls zur Schonung der Artikel während des Transports beiträgt.

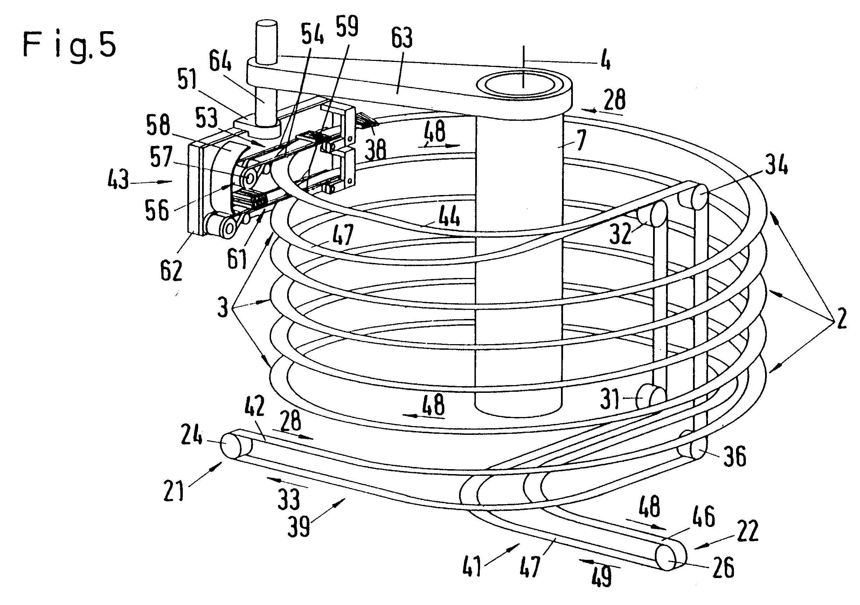

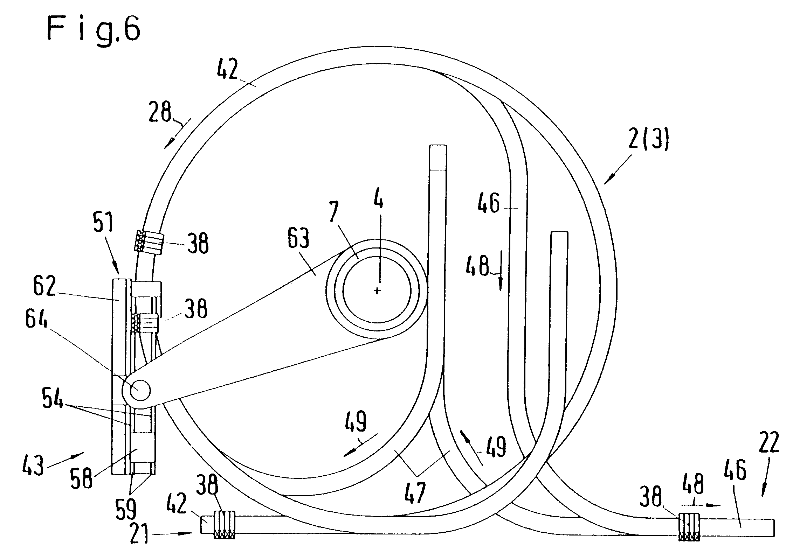

Eine weitere Ausführungsform der Erfindung ist in den Figuren 5 und 6 ebenfalls in einer perspektivischen Ansicht und einer schematischen Draufsicht dargestellt. Gleiche Teile sind wieder mit denselben Bezugszeichen versehen wie in den Figuren 1 bis 4. Wie bei der Ausführung nach den Figuren 3 und 4 sind auch hier zwei Führungsbahnwendeln 2 und 3 vorgesehen, die mit übereinstimmendem Radius und gleicher Steigung konzentrisch um eine gemeinsame Achse 4 verlaufen. Anders als in den zuvor beschriebenen Ausführungsbeispielen sind hier aber zwei separat antreibbare Band- oder Kettenförderer 39 bzw. 41 vorgesehen. Das Fördertrum 42 des Förderers 39 läuft von der Aufgabezone 21 ausgehend in Förderrichtung 28 in der Führungsbahnwendel 2 aufwärts bis zu einem später noch zu beschreibenden Brückenelement 43, von dem aus das Rücklauftrum 44 des Förderers 39 über die Umlenkrollen 34 und 36 zur Umlenkrolle 24 der Aufgabezone 21 zurückgeführt ist. Das Fördertrum 46 des zweiten Förderers 41 verläuft in der zweiten Führungsbahnwendel 3 ausgehend von dem Brückenelement 43 abwärts zur Abgabezone 22, und sein Rücklauftrum 47 ist von der Abgabezone 22 über die Umlenkrollen 31 und 32 von oben her in die zweite Führungsbahnwendel 3 eingeführt und endet am Brückenelement 43. Die Förderrichtung des Förderers 41 ist mit 48 bezeichnet.

Die Pfeile 33 bezeichnen die Bewegungsrichtung des Rücklauftrums des ersten Förderers 39 und die Pfeile 49 markieren die Bewegungsrichtung des Rücklauftrums 47 des Förderers 41.

Das Brückenelement 43 ist beim Ausführungsbeispiel der Figuren 5 und 6 als Bandwagen 51 ausgebildet, der am äußeren Umfang der Führungsbahnwendeln 2 und 3 verfahrbar ist und die Förderstrecke von der ersten Führungsbahnwendel 2 auf die zweite Führungsbahnwendel 3 umlenkt. Der Bandwagen 51 weist einen Entnahmeförderer 53 auf, der aus zwei das Fördertrum 42 des Förderers 39 auf beiden Seiten tangierenden Förderbändern 54 besteht. Die Bänder 54 des Entnahmeförderers 53 heben den vom Förderer 39 geförderten Artikelstrom 38 von dessen Fördertrum 42 ab und bewegen ihn tangential zur Führungsbahnwendel 2 zu einer als Vertikalförderstrecke ausgebildeten Umlenkzone 56. Die Umlenkzone wird einerseits von der rückwärtigen Umlenkrolle 57 des Entnahmeförderers 53 und andererseits von einem Umlenkblech 58 begrenzt. Sie mündet auf einem aus zwei Förderbändern 59 bestehenden Rückführförderer 61, der die umgelenkten Artikel in umgekehrter Förderrichtung 48 tangential auf dem Fördertrum 46 des zweiten Förderers 41 in der Führungsbahnwendel 3 ablegt. Der Entnahmeförderer 53 und der Rückführförderer 61 sind an einem Chassis 62 gelagert, das an einer von einem Dreharm 63 gehaltenen Hubstange 64 auf und ab bewegbar ist. Der Dreharm ist an einer zur Achse 4 konzentrischen Säule 7 in einer horizontalen Ebene drehbar angebracht. Die Wendeln sind wie bei der Anordnung nach Figur 1 an von Säulen getragenen Stützarmen angebracht. Die Säulen stehen aber hier im Inneren des von den Wendeln umgebenen Raumes, um die Bewegung des Bandwagens nicht zu verhindern. Die Säulen- und Stützarmanordnung ist in der Zeichnung nicht dargestellt.

Zum Verändern der Länge der Förderstrecke in den beiden Führungsbahnwendeln 2 und 3 wird der Bandwagen 51 durch Drehen des Dreharms 63 um die Achse 4 und durch gleichzeitiges Verstellen der Höhe des Bandwagens entlang der Hubstange 64 entsprechend verfahren, so daß der Bandwagen an den Windungen der Führungsbahnwendeln entlang bewegt wird. Dabei wandern der Entnahmeförderer und der Rückführförderer entsprechend an den Wendeln entlang und verändern die Speicherkapazität der Förderstrecke. Soll die Speicherkapazität verkleinert werden, so wird der Bandwagen mittels des Dreharms 63 im Uhrzeigersinn bewegt und gleichzeitig entlang der Hubstange 64 entsprechend der Wendelsteigung gesenkt. Zum Vergrößern der Speicherkapazität wird in entgegengesetzter Richtung verfahren. Die Figur 5 zeigt den Bandwagen in einer Position, welche der Förderstrecke ihre größte Speicherkapazität gibt.

Diese Ausführungsform der Fördervorrichtung nach der Erfindung hat den Vorteil, daß die Artikel im Massenstrom beim Übergang von der einen Führungsbahnwendel zur anderen nicht umorientiert werden müssen.

In Figur 5 sind einige Artikel 38 eingezeichnet, wobei zu erkennen ist, daß sie axial nach außen und innen über die Fördertrume 42 bzw. 46 der Förderer 39 bzw. 41 herausragen, so daß sie von den Bändern 54 des Entnahmeförderers 53 erfaßt und von dem Fördertrum des Förderers 39 abgehoben werden können. Der Förderer 39 ist im Bogen unter dem Rücklauftrum eines der Bänder 54 des Entnahmeförderers hindurchgeführt. Entsprechend ist die Anordnung beim Rückführförderer 61.

In der Zeichnung sind die Führungsbahn und die Führungsbahnabschnitte nur schematisch durch den Bandverlauf angedeutet, um die Anschaulichkeit der Darstellung nicht zu beeinträchtigen. Aus demselben Grund wurde außer in Figur 1 auf die Darstellung eines die Wendeln tragenden Gestells und der Antriebsmittel für die Bewegung der Förderer verzichtet. Es versteht sich, daß ein Gestell zum Tragen der Führungsbahnwendeln 2 und 3 und die Antriebe für die Förderer 39 und 41 bei der Ausführungsform der Figuren 5 und 6 im Innern der Wendeln angeordnet sein sollten, um einen freien Umlauf des Bandwagens 51 zu ermöglichen. Andrerseits ist es möglich, den Bandwagen 51 der Innenseite der Führungsbahnwendeln zuzuordnen. In diesem Fall verlaufen der Entnahmeförderer 53 und der Rückführförderer 61 in einem Bogen nach innen zur Umlenkzone 56. Diese Möglichkeit ist von der Erfindung mit umfaßt. Das die Wendeln 2 und 3 tragende Gestell liegt dann entsprechend an der Außenseite der Wendeln.

## Patentansprüche

1. Vorrichtung zum Fördern von Artikeln (38)entlang einer Förderstrecke, insbesondere zum Fördern eines Massenstroms stabförmiger Artikel der tabakverarbeitenden Industrie, mit Fördermitteln (18,39,41), welche die Artikel von einer Aufgabezone (21) entlang der Förderstrecke zu einer Abgabezone (22) bewegen, einer die Fördermittel wenigstens in einem Förderstreckenabschnitt führenden Führungsbahn (1), welche zwei als Wendeln ausgebildete Führungsbahnabschnitte (2,3) aufweist, wobei in jeder Führungsbahnwendel (2,3) ein Teil der Förderstrecke verläuft und mit Mitteln (9,43) zum Verändern der Länge der Förderstrecke zwischen der Aufgabezone (21) und der Abgabezone (22), dadurch gekennzeichnet, daß die beiden Führungsbahnwendeln (2,3) um eine gemeinsame vertikale Achse (4) herum angeordnet sind, daß sie durch ein die Förderstrecke von einem der Führungsbahnabschnitte (2) zum anderen (3) überführendes Brückenelement miteinander verbunden sind und daß Mittel zum Verändern der Länge der Förderstrecke zwischen der Aufgabezone und dem Brückenelement sowie zwischen dem Brückenelement und der Abgabezone vorgesehen sind.

2. Vorrichtung nach Anspruch 1, dadurch gekennzeichnet, daß die Förderstrecke entlang wenigstens einer Teillänge jedes Führungsbahnabschnitts geführt ist, derart daß sie in einer der Führungsbahnwendeln (2) in einer ersten Richtung (66) und in der anderen (3) in einer entgegengesetzten zweiten Richtung (67) verläuft.

3. Vorrichtung nach Anspruch 2, dadurch gekennzeichnet, daß die beiden Führungsbahnwendeln (2,3) konzentrisch um die gemeinsame vertikale Achse (4) herum angeordnet sind.

4. Vorrichtung nach einem der Ansprüche 1 bis 3, dadurch gekennzeichnet, daß die beiden Führungsbahnwendeln (2,3) in demselben Radius um die gemeinsame vertikale Achse (4) verlaufen.

5. Vorrichtung nach einem der Ansprüche 1 bis 4, dadurch gekennzeichnet, daß das Brückenelement (9) als die Förderstrecke von einer Führungsbahnwendel (2) zur anderen (3) überleitende Bandbrücke ausgebildet ist, welche zum Führen wenigstens eines Bandförderers (18) ausgebildet ist und die Förderrichtung des ersten Führungsbahnabschnittes (2) in die entgegengesetzte Förderrichtung des zweiten Führungsbahnabschnitts (3) umkehrt.

6. Vorrichtung nach einem der Ansprüche 1 bis 5, dadurch gekennzeichnet, daß das Brückenelement (9) als Bandbrücke ausgebildet ist, welche ausgehend von einer der Führungsbahnwendeln (2) durch den von den Wendeln umschlossenen Innenraum in einer Wendekurve (29) zur anderen Führungsbahnwendel (3) führt.

7. Vorrichtung nach einem der Ansprüche 1 bis 6, dadurch gekennzeichnet, daß als Fördermittel ein Band- oder Kettenförderer (18) vorgesehen ist, dessen die Artikel (38) tragendes Fördertrum (19) von der Aufgabezone (21) in einer ersten Richtung (66) wenigstens durch eine Teillänge der ersten Führungsbahnwendel (2), über das Brückenelement (9) und in entgegengesetzter Richtung (67) durch eine entsprechende Teillänge der zweiten Führungsbahnwendel (3) zur Abgabezone (22) geführt ist und dessen leeres Rücklauftrum (23) von der Abgabezone (22) zurück zur Aufgabezone (21) verläuft.
